(19) **Europäisches Patentamt / European Patent Office / Office européen des brevets**

(11) **EP 4 596 345 A1**

(12) **EUROPEAN PATENT APPLICATION**
published in accordance with Art. 153(4) EPC

(43) Date of publication:
06.08.2025 Bulletin 2025/32

(21) Application number: 23869948.2

(22) Date of filing: 24.07.2023

(51) International Patent Classification (IPC):
B60W 20/11 (2016.01)    B60W 10/06 (2006.01)
B60W 10/08 (2006.01)

(52) Cooperative Patent Classification (CPC):
B60W 10/06; B60W 10/08; B60W 20/11;
B60W 40/00

(86) International application number:
PCT/CN2023/108978

(87) International publication number:
WO 2024/066702 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 CN 202211203935

(71) Applicant: BYD Company Limited
Shenzhen, Guangdong 518118 (CN)

(72) Inventors:
• YANG, Dongsheng
Shenzhen, Guangdong 518118 (CN)

• ZHU, Futang
Shenzhen, Guangdong 518118 (CN)
• WANG, Chunsheng
Shenzhen, Guangdong 518118 (CN)
• SHEN, Tao
Shenzhen, Guangdong 518118 (CN)
• WU, Jinlong
Shenzhen, Guangdong 518118 (CN)

(74) Representative: Mathys & Squire
The Shard
32 London Bridge Street
London SE1 9SG (GB)

(54) **HYBRID VEHICLE AND ENERGY MANAGEMENT METHOD THEREFOR, APPARATUS, MEDIUM AND ELECTRONIC DEVICE**

(57) A hybrid vehicle (10) and an energy management method therefor, an apparatus (100), a medium, and an electronic device, relating to the technical field of vehicles. The method comprises: S12, acquiring a working condition category sequence of a current navigation route of the hybrid vehicle (10) and the mileage of each working condition of the current navigation route, the working condition category sequence and the mileage of each working condition being obtained according to road characteristic parameters of the current navigation route; S13, acquiring a target state-of-charge sequence according to the working condition category sequence and the mileage of each working condition; and obtaining an equivalent factor sequence according to the working condition category sequence and the target state-of-charge sequence; and S14, according to the equivalent factor sequence, obtaining the instantaneous output power of a power battery of the hybrid vehicle (10) at each moment; and controlling the hybrid vehicle (10) according to the instantaneous output power of the power battery. The present application achieves on-line control of the hybrid vehicle (10), and achieves global optimal control of the hybrid vehicle (10), thus ensuring the fuel economy.

EP 4 596 345 A1

Acquire road characteristic parameters of a current navigation route of a hybrid vehicle — S11

Obtain a working condition category sequence of the current navigation route and mileage of each working condition according to the road characteristic parameters by using a pre-trained neural network model — S12

Acquire a target state-of-charge sequence according to the working condition category sequence and the mileage of each working condition, and obtain an equivalent factor sequence according to the working condition category sequence, the mileage of each working condition, and the target state-of-charge sequence by using an equivalent consumption minimum strategy — S13

Obtain instantaneous output power of a power battery of the hybrid vehicle at each moment according to the equivalent factor sequence, and control the hybrid vehicle according to the instantaneous output power of the power battery — S14

FIG. 1

**Description**

## CROSS-REFERENCE TO RELATED APPLICATIONS

The present disclosure claims priority to Chinese Patent Application No. 202211203935.0, entitled "HYBRID VEHICLE AND ENERGY MANAGEMENT METHOD THEREFOR, APPARATUS, MEDIUM AND ELECTRONIC DEVICE" and filed on September 29, 2022. The entire content of the above-referenced application is incorporated herein by reference.

## FIELD

The present disclosure relates to the technical field of vehicles, and specifically, to a hybrid vehicle and an energy management method and apparatus therefor, a medium and an electronic device.

## BACKGROUND

In related arts, an energy management strategy for a hybrid vehicle is based on dynamic planning algorithms, which adopt the Equivalent Consumption Minimum Strategy (ECMS) with a constant equivalent factor. However, this strategy can only achieve optimal control under specific working conditions. When a driving condition changes, this strategy is not able to ensure the vehicle's fuel economy.

## SUMMARY

The present disclosure is intended to solve one of technical problems in the related arts at least to some extent. In view of this, an objective of the present disclosure is to provide a hybrid vehicle and an energy management method and apparatus therefor, a medium and an electronic device, so as to achieve on-line control of the hybrid vehicle, and achieve global optimal control of the hybrid vehicle, thus ensuring the fuel economy.

To achieve the above objective, according to a first aspect, an embodiment of the present disclosure provides an energy management method for a hybrid vehicle. The method includes: a working condition category sequence of a current navigation route of the hybrid vehicle and mileage of each working condition of the current navigation route are acquired, the working condition category sequence and the mileage of each working condition being obtained according to road characteristic parameters of the current navigation route; a target state-of-charge sequence is acquired according to the working condition category sequence and the mileage of each working condition; an equivalent factor sequence is obtained according to the working condition category sequence and the target state-of-charge sequence; instantaneous output power of a power battery of the hybrid vehicle at each moment is obtained according to the equivalent factor sequence; and the hybrid vehicle is controlled according to the instantaneous output power of the power battery.

Additionally, the energy management method for a hybrid vehicle according to the example of the present disclosure may further have the following additional technical features:

According to an example of the present disclosure, the step that a target state-of-charge sequence is acquired according to the working condition category sequence and the mileage of each working condition includes: an actual state-of-charge of the power battery at a starting point of the current navigation route is acquired; a state-of-charge change range of the hybrid vehicle at the end of each working condition is determined according to the actual state-of-charge, the working condition category sequence, and the mileage of each working condition; and the target state-of-charge sequence is obtained according to the state-of-charge change range at the end of each working condition.

According to an example of the present disclosure, the state-of-charge change range at the end of a first working condition of the current navigation route is obtained according to the actual state-of-charge, road characteristic data of the first working condition, and the mileage of the first working condition; and the state-of-charge change range at the end of a non-first working condition of the current navigation route is obtained according to the state-of-charge change range at the end of a previous working condition of the non-first working condition, road characteristic data of the non-first working condition, and the mileage of the non-first working condition.

According to an example of the present disclosure, the road characteristic data includes slope data and speed limit data.

According to an example of the present disclosure, an upper limit of the state-of-charge change range of the working condition is a state-of-charge of the hybrid vehicle at the end of operation of the working condition in a power generation mode, and a lower limit of the state-of-charge change range of the working condition is a state-of-charge of the hybrid vehicle at the end of operation of the working condition in a pure electric mode.

According to an example of the present disclosure, the target state-of-charge sequence is obtained according to each target state-of-charge selected from the state-of-charge change range corresponding to each working condition.

According to an example of the present disclosure, the working condition category sequence and the mileage of each working condition are obtained by using a trained neural network model according to the road characteristic parameters of the current navigation route, and a process of training the neural network model includes: historical driving parameters of the hybrid vehicle on the current navigation route is acquired, historical road characteristic parameters are determined according to the historical driving parameters, and clustering processing is performed on the historical road characteristic parameters to obtain multiple working condition categories; a training dataset is constructed based on the historical road characteristic parameters and the working condition categories; and the neural network model is constructed and the neural network model is trained using the training dataset.

According to an example of the present disclosure, the working condition categories include: ordinary urban roads, mildly congested urban roads, moderately congested urban roads, severely congested urban roads, expressways, highways, suburban roads, and township roads.

According to an example of the present disclosure, the road characteristic parameters include at least one of: average speed, maximum speed, speed standard deviation, average acceleration, maximum acceleration, minimum acceleration, acceleration standard deviation, acceleration time ratio, deceleration time ratio, uniform speed time ratio, idle time ratio, and cumulative mileage.

According to an example of the present disclosure, for each equivalent factor in the equivalent factor sequence, the instantaneous output power of the battery of the hybrid vehicle under the working condition corresponding to the equivalent factor is calculated according to the following formula:

$$arg\, H\left(u, SOC(t), t\right) = arg\dot{m}_{eng}(u, t) + s(t) * \dot{SOC}(t),$$

where H (u, SOC (t), t) is a Hamiltonian function established according to an equivalent consumption minimum strategy, $arg\, H\, (u,\, SOC(t),\, t)$ is the instantaneous output power of the power battery at moment t, $\dot{m}_{eng}(u, t)$ is the fuel consumption rate of an engine of the hybrid vehicle, $s(t)$ is an equivalent factor at moment t, $SOC(t)$ is the state-of-charge of the power battery at moment t, $\dot{SOC}(t)$ is the state-of-charge change rate, and u is the fuel consumption.

According to an example of the present disclosure, the step that the hybrid vehicle is controlled according to the instantaneous output power of the power battery includes: instantaneous required power of the hybrid vehicle at moment t is acquired; the instantaneous output power of the power battery at the moment t is subtracted from the instantaneous required power at the moment t to obtain instantaneous required power of an engine of the hybrid vehicle at the moment t; and the power battery and the engine are controlled according to the instantaneous output power of the power battery at the moment t and instantaneous output power of the engine at the moment t.

To achieve the above objective, according to a second aspect, an embodiment of the present disclosure provides a computer-readable storage medium, which stores a computer program thereon. The computer program, when executed by a processor, implements the energy management method for a hybrid vehicle described above.

To achieve the above objective, according to a third aspect, an embodiment of the present disclosure provides an electronic device, which includes a memory, a processor, and a computer program stored on the memory and executable on the processor. The computer program, when executed by the processor, implements the energy management method for a hybrid vehicle described above.

To achieve the above objective, according to a fourth aspect, an embodiment of the present disclosure provides an energy management apparatus for a hybrid vehicle, which includes: an acquisition module, configured to acquire a working condition category sequence of a current navigation route of the hybrid vehicle and mileage of each working condition of the current navigation route, the working condition category sequence and the mileage of each working condition being obtained according to road characteristic parameters of the current navigation route; acquire a target state-of-charge sequence according to the working condition category sequence and the mileage of each working condition; obtain an equivalent factor sequence according to the working condition category sequence and the target state-of-charge sequence; and obtain instantaneous output power of a power battery of the hybrid vehicle at each moment according to the equivalent factor sequence; and an energy management module, configured to control the hybrid vehicle according to the instantaneous output power of the power battery.

To achieve the above objective, according to a fifth aspect, an embodiment of the present disclosure provides a hybrid vehicle, which includes the energy management apparatus for a hybrid vehicle described above.

The hybrid vehicle and the energy management method and apparatus therefor, the medium and the electronic device according to the examples of the present disclosure can achieve the on-line control of the hybrid vehicle by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence and the target state-of-charge sequence, so that the equivalent factor changes according to the working condition category of the road section and the fuel economy is ensured. Moreover, since the current navigation route is acquired first, the equivalent factor sequence is obtained based on the current navigation route, the instantaneous output power of the power battery of the hybrid vehicle at each moment is obtained according to the equivalent factor sequence, and the hybrid vehicle is controlled according to the instantaneous output power of the power battery, energy management is achieved on the current navigation route based on the equivalent factor sequence, so that energy management is not affected by the frequency of navigation map data output, the required calculation amount is small, and the fuel economy can be better ensured in a case that the working condition changes.

The additional aspects and advantages of the present disclosure will be partially provided in the following description, some of which will become clear from the following description or may be learned from the practice of the present disclosure.

## BRIEF DESCRIPTION OF THE DRAWINGS

FIG. 1 is a flowchart of an energy management method for a hybrid vehicle according to an example of the present disclosure;
FIG. 2 is a schematic diagram of state-of-charge change paths according to an example of the present disclosure;
FIG. 3 is a schematic structural diagram of a neural network model according to an example of the present disclosure;
FIG. 4 is a structural block diagram of an energy management apparatus for a hybrid vehicle according to an example of the present disclosure; and
FIG. 5 is a structural block diagram of a hybrid vehicle according to an example of the present disclosure.

## DETAILED DESCRIPTION

A hybrid vehicle and an energy management method and apparatus therefor, a medium and an electronic device according to examples of the present disclosure will be described below with reference to the accompanying drawings, where the same or similar reference signs throughout represent the same or similar components or components with the same or similar functions. The examples described below with reference to the accompanying drawings are exemplary, and cannot be understood as limitations to the present disclosure.

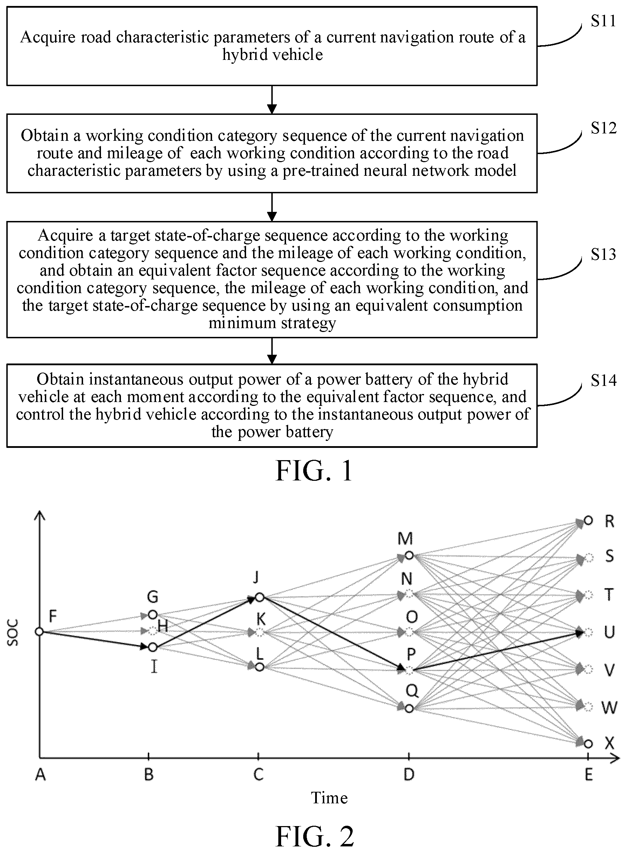

FIG. 1 is a flowchart of an energy management method for a hybrid vehicle according to an example of the present disclosure.

As shown in FIG. 1, the energy management method for a hybrid vehicle includes the following steps:

S11, road characteristic parameters of a current navigation route of the hybrid vehicle are acquired.
S12, a working condition category sequence of the current navigation route and mileage of each working condition are obtained according to the road characteristic parameters by using a pre-trained neural network model.
S13, a target state-of-charge sequence is acquired according to the working condition category sequence and the mileage of each working condition, and an equivalent factor sequence is obtained according to the working condition category sequence, the mileage of each working condition, and the target state-of-charge sequence by using an equivalent consumption minimum strategy.
S14, instantaneous output power of a power battery of the hybrid vehicle at each moment is obtained according to the equivalent factor sequence, and the hybrid vehicle is controlled according to the instantaneous output power of the power battery.

Specifically, a vehicle simulation model is pre-established. Off-line calculation is performed on related performance such as energy consumption of the hybrid vehicle under each working condition through the vehicle simulation model. The working conditions of the hybrid vehicle are divided into multiple working condition categories according to a performance calculation result. Moreover, the neural network model is trained in advance, so that the neural network model can output a working condition category sequence after road characteristic parameters of a navigation map are entered.

When the hybrid vehicle needs to be driven, road characteristic parameters of the current navigation route of the hybrid vehicle are acquired according to the navigation map, and the road characteristic parameters acquired through the navigation map are input into the pre-trained neural network model to obtain the working condition category and mileage of each road section of the current navigation route. In addition, the working condition categories are sorted to obtain the working condition category sequence. A target state-of-charge sequence corresponding to the current navigation route is obtained according to the working condition category sequence and the mileage of each working condition. An equivalent factor sequence is obtained by using the equivalent consumption minimum strategy. Energy management is performed on the hybrid vehicle according to the equivalent factor sequence.

In this way, the on-line control of the hybrid vehicle can be achieved by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence, the mileage of each working condition and the target state-of-charge sequence, so that the equivalent factor changes according to the working condition category of the road section and the fuel economy is ensured. Moreover, since the current navigation route is acquired first and the equivalent factor sequence is obtained based on the current navigation route, energy management is achieved on the current navigation route based on the equivalent factor sequence, so that energy management is not affected by the frequency of navigation map data output, the required calculation amount is small, and the fuel economy can be better ensured in a case that the working condition changes.

According to some examples of the present disclosure, the step that a target state-of-charge sequence is acquired according to the working condition category sequence and the mileage of each working condition includes: a current actual state-of-charge of the power battery is acquired; a state-of-charge change range of the hybrid vehicle at the end of each working condition is determined according to the actual state-of-charge, the working condition category sequence, and the mileage of each working condition; and the target state-of-charge sequence is obtained according to the state-of-charge change range at the end of each working condition.

Specifically, after the working condition category sequence and the mileage of each working condition are received, the working condition category sequence and the mileage of each working condition may be transmitted to a third-party platform to obtain the target state-of-charge sequence, or the target state-of-charge sequence may be directly calculated locally.

To calculate the target state-of-charge sequence, a first state-of-charge and a second state-of-charge at the end of a first working condition may be determined according to the current actual state-of-charge of the hybrid vehicle, the road characteristic data corresponding to the first working condition in the working condition category sequence, and the mileage of the first working condition. A state-of-charge change range at the end of the first working condition may be obtained according to the first state-of-charge and the second state-of-charge. The road characteristic data includes slope data and speed limit data. The first state-of-charge is a state-of-charge of the hybrid vehicle at the end of the first working condition in a power generation mode. The second state-of-charge is a state-of-charge of the hybrid vehicle at the end of the first working condition in a pure electric mode. For each working condition in the working condition category sequence except for the first working condition, a state-of-charge change range of the hybrid vehicle at the end of the working condition is determined according to the state-of-charge change range at the end of a previous working condition, the road characteristic data corresponding to the working condition, and the mileage of the working condition.

In the present example, a target state-of-charge may be selected from the state-of-charge change range corresponding to each working condition. Then, the target state-of-charge sequence is obtained according to each target state-of-charge.

In some examples, referring to FIG. 2, the first working condition is Working Condition 1 corresponding to Section AB. The actual state-of-charge of the hybrid vehicle at Point A is F. It is determined that the first state-of-charge at Point B is G, that is, an upper limit of the state-of-charge of Working Condition 1 is G, according to that the hybrid vehicle adopts a power generation mode, that is, the hybrid vehicle completely uses fuel under Working Condition 1 from Point A to Point B and the battery is in a charging state. It is determined that the second state-of-charge at Point B is I, that is, a lower limit of the state-of-charge of Working Condition 1 is I, according to that the hybrid vehicle adopts a pure electric mode, that is, the hybrid vehicle completely uses electricity under Working Condition 1 from Point A to Point B and the battery is in a discharging state. Accordingly, it may be determined that a state-of-charge change range under Working Condition 1 is [I, G]. It is assumed that the actual state-of-charge F under Working Condition 1 is 70%, the upper limit G of the state-of-charge at Point B is 75%, and the lower limit I of the state-of-charge is 65%, then the state-of-charge change range under Working Condition 1 is [65%, 75%].

Then, a state-of-charge change range of the hybrid vehicle under Working Condition 2 is determined according to the working condition data corresponding to Working Condition 2 and the state-of-charge change range corresponding to the previous working condition of Working Condition 2, i.e., Working Condition 1. Firstly, it is determined that a third state-of-charge at Point C is J, that is, an upper limit of the state-of-charge of Working Condition 2 is J, according to that the upper limit G of the state-of-charge of Working Condition 1 is used as the actual state-of-charge of Working Condition 2, the hybrid vehicle adopts a power generation mode, that is, the hybrid vehicle completely uses fuel under Working Condition 2 and the battery is in a charging state. Then, it is determined that a fourth state-of-charge at Point C is L, that is, a lower limit of the state-of-charge of Working Condition 2 is L, according to that the lower limit I of the state-of-charge of Working Condition 1 is used as the actual state-of-charge of Working Condition 2, the hybrid vehicle adopts a pure electric mode, that is, the hybrid vehicle completely uses electricity under Working Condition 2 from Point B to Point C and the battery is in a discharging state. Accordingly, it is determined that a state-of-charge change range under Working Condition 2 is [L, J].

Continuing to refer to FIG. 2, the actual state-of-charge at Point A is F. It is assumed that Point H is selected from the state-of-charge change range [I, G] as the target state-of-charge value, then F-H is a state-of-charge change path of Working Condition 1.

The target state-of-charge value of Working Condition 1 at Section AB includes not only Point H in the state-of-charge change range mentioned above, but also the upper limit G and lower limit I of the state-of-charge. At this time, three state-of-charge change paths F-G, F-H, and F-I may be formed under Working Condition 1 at Section AB. The actual state-of-charge of Working Condition 2 at Section BC may be the target state-of-charge value at Section AB, including G, H, and I. The preset reference state-of-charge at Section BC includes J, K, and L. At this time, nine state-of-charge change paths G-J, G-K, G-L, H-J, H-K, H-L, I-J, I-K, and I-L may be formed at Section BC. Similarly, fifteen state-of-charge change paths may be formed under Working Condition 3 at Section CD, and thirty state-of-charge change paths may be formed under Working Condition 4 at Section DE. Based on the above content, it can be seen that 3*9*15*30=12150 state-of-charge change paths may be formed for the hybrid vehicle under the working conditions of the current driving road AE.

It needs to be stated that the more the target state-of-charge values of each working condition, the more the state-of-charge change paths generated, the higher the accuracy of determining the state-of-charge change path with the minimum energy consumption under the working condition, and the better the energy management effect of the hybrid vehicle achieved.

The fuel consumption and power consumption of different state-of-charge change paths are calculated, the state-of-charge change path with the minimum fuel consumption and power consumption is selected by comparing to serve as the optimal state-of-charge change path, and the optimal state-of-charge change path is used as the target state-of-charge change path of this working condition, so that the hybrid vehicle can be controlled to perform energy management. Taking Working Condition 1 at Section AB as an example, the fuel consumption and power consumption of the state-of-charge change paths F-G, F-H, and F-I are obtained respectively, and it is determined through calculation that the fuel consumption and power consumption of the state-of-charge change path F-I are the minimum. Therefore, the state-of-charge change path F-I is used as the target state-of-charge change path at Section AB, and I is the optimal state-of-charge at the end of Working Condition 1. Similarly, it is determined that the target state-of-charge change path at Section BC is I-J, the target state-of-charge change path at Section CD is J-P, and the target state-of-charge change path at Section DE is P-U. Therefore, the target state-of-charge change path of the driving road AE is F-I-J-P-U.

In this way, the target state-of-charge sequence can be acquired according to the working condition category sequence and the mileage of each working condition. Moreover, this process may be performed on a third-party platform, thus reducing the calculation amount and calculation time of the vehicle, and the fuel economy in a case that the working condition changes can be ensured.

In some examples of the present disclosure, a process of training the neural network model includes: historical driving parameters of the hybrid vehicle on the current navigation route is acquired, historical road characteristic parameters are determined according to the historical driving parameters, and clustering processing is performed on the historical road characteristic parameters to obtain multiple working condition categories; a training dataset is constructed based on the historical road characteristic parameters and the working condition categories; and a neural network model is constructed and the neural network model is trained using the training dataset. The neural network model includes an input layer, hidden layers, and an output layer. The input layer is configured to input the road characteristic parameters subjected to dimension reduction processing. The output layer is configured to output the working condition categories.

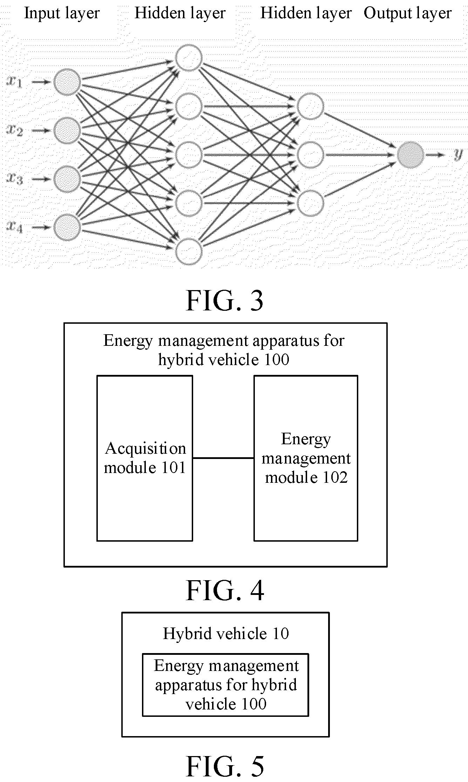

Specifically, a neural network model as shown in FIG. 3 is constructed first, including an input layer, hidden layers, and an output layer. The input layer inputs $x_1$, $x_2$, ... $x_n$ as the road characteristic parameters. In the specific example shown in FIG. 3, n is 4. The neural network model supports road characteristic parameters with dimensions of 4. The output layer outputs y as the working condition category.

To train the neural network model, historical driving parameters of the hybrid vehicle on the current navigation route are acquired first, and historical road characteristic parameters are determined according to the historical driving parameters.

Moreover, a clustering analysis algorithm is adopted to perform working condition classification, that is, a Euclidean distance method is adopted to divide the historical road characteristic parameters into different working condition categories, so as to train the neural network model according to the historical road characteristic parameters and the corresponding working condition categories.

Alternatively, before the neural network model is trained, a principal component analysis method may also be adopted to perform dimension reduction processing on the historical road characteristic parameters, so as to train the neural network model by using the historical road characteristic parameters subjected to dimension reduction processing.

In addition, the neural network model further obtains a working condition category sequence of the current navigation route and mileage of each working condition according to the road characteristic parameters subjected to dimension reduction processing.

In some examples of the present disclosure, the working condition categories include: ordinary urban roads, mildly congested urban roads, moderately congested urban roads, severely congested urban roads, expressways, highways, suburban roads, and township roads.

In some examples of the present disclosure, the road characteristic parameters include at least one of: average speed, maximum speed, speed standard deviation, average acceleration, maximum acceleration, minimum acceleration, acceleration standard deviation, acceleration time ratio, deceleration time ratio, uniform speed time ratio, idle time ratio, and cumulative mileage.

In some examples of the present disclosure, the step that instantaneous output power of a power battery of the hybrid vehicle at each moment is obtained according to the equivalent factor sequence includes: for each equivalent factor in the equivalent factor sequence, the instantaneous output power of the battery of the hybrid vehicle corresponding to the equivalent factor is calculated according to the following formula:

$$arg\, H\left(u, SOC(t), t\right) = arg\dot{m}_{eng}(u, t) + s(t) * \dot{SOC}(t),$$

where H (u, SOC (t), t) is a Hamiltonian function established according to an equivalent consumption minimum strategy, $arg\, H(u, SOC(t), t)$ is the instantaneous output power of the power battery of the hybrid vehicle at moment t, $\dot{m}_{eng}$ (u, t) is the fuel consumption rate of an engine of the hybrid vehicle, $s(t)$ is an equivalent factor at moment t, $SOC(t)$ is the state-of-charge of the power battery at moment t, $\dot{SOC}(t)$ is the state-of-charge change rate, and u is the fuel consumption.

Specifically, a Hamiltonian function is established, each working condition category is computed and a relationship among the working condition categories, the target state-of-charge, and the equivalent factors is constructed by using the equivalent consumption minimum strategy. Solving the Hamiltonian function can establish the relationship between the target state-of-charge of the battery and the equivalent factor under the current working condition category, thus the optimal equivalent factor in each target state-of-charge under the current working condition category is determined. After the optimal equivalent factor is obtained, the instantaneous output power of the battery of the hybrid vehicle corresponding to the optimal equivalent factor can be obtained, and the hybrid vehicle can be controlled according to the instantaneous output power of the power battery. For example, after the instantaneous output power of the power battery at moment t is acquired, the instantaneous required power of the hybrid vehicle at the moment t can be acquired. The instantaneous output power of the power battery at the moment t is subtracted from the instantaneous required power at the moment t to obtain instantaneous required power of an engine of the hybrid vehicle at the moment t. The power battery and the engine are controlled according to the instantaneous output power of the power battery at the moment t and instantaneous output power of the engine at the moment t.

In this way, the output power can be obtained based on the equivalent factor optimized in real time, thus achieving the full-time-domain optimal energy management of the entire navigation route.

To sum up, the energy management method for a hybrid vehicle according to the examples of the present disclosure can achieve the on-line control of the hybrid vehicle by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence, the mileage of each working condition and the target state-of-charge sequence, so that the equivalent factor changes according to the working condition category of the road section and the fuel economy is ensured. Moreover, since the current navigation route is acquired first and the equivalent factor sequence is obtained based on the current navigation route, energy management is achieved on the current navigation route based on the equivalent factor sequence, so that energy management is not affected by the frequency of navigation map data output, the required calculation amount is small, and the fuel economy can be better ensured in a case that the working condition changes.

Based on the energy management method for a hybrid vehicle according to the above examples, the present disclosure provides a computer-readable storage medium.

In an example of the present disclosure, the computer-readable storage medium stores a computer program. The computer program, when executed by a processor, implements the energy management method for a hybrid vehicle described above.

Through implementing the energy management method for a hybrid vehicle described above, the computer-readable storage medium according to the example of the present disclosure can achieve the on-line control of the hybrid vehicle by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence, the mileage of each working condition and the target state-of-charge sequence, so that the equivalent factor changes according to the working condition category of the road section and the fuel economy is ensured. Moreover, since the current navigation route is acquired first and the equivalent factor sequence is obtained based on the current navigation route, energy management is achieved on the current navigation route based on the equivalent factor sequence, so that energy management is not affected by the frequency of navigation map data output, the required calculation amount is small, and the fuel economy can be better ensured in a case that the working condition changes.

Based on the energy management method for a hybrid vehicle according to the above examples, the present disclosure provides an electronic device.

In an example of the present disclosure, the electronic device includes a memory, a processor, and a computer program stored on the memory and executable on the processor. The computer program, when executed by the processor, implements the energy management method for a hybrid vehicle described above.

Through implementing the energy management method for a hybrid vehicle described above, the electronic device according to the example of the present disclosure can achieve the on-line control of the hybrid vehicle by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence, the mileage of each working condition and the target state-of-charge sequence, so that the equivalent factor changes according to the working condition category of the road section and the fuel economy is ensured. Moreover, since the current navigation route is acquired first and the equivalent factor sequence is obtained based on the current navigation route, energy management is achieved on the current navigation route based on the equivalent factor sequence, so that energy management is not affected by the frequency of navigation map data output, the required calculation amount is small, and the fuel economy can be better ensured in a case that the working condition changes.

FIG. 4 is a structural block diagram of an energy management apparatus for a hybrid vehicle according to an example of the present disclosure.

As shown in FIG. 4, the energy management apparatus 100 for a hybrid vehicle includes: an acquisition module 101 and an energy management module 102.

Specifically, the acquisition module 101 is configured to acquire road characteristic parameters of a current navigation route of the hybrid vehicle, obtain a working condition category sequence of the current navigation route and mileage of each working condition according to the road characteristic parameters by using a pre-trained neural network model, acquire a target state-of-charge sequence according to the working condition category sequence and the mileage of each working condition, obtain an equivalent factor sequence according to the working condition category sequence, the mileage of each working condition, and the target state-of-charge sequence by using an equivalent consumption minimum strategy, and obtain instantaneous output power of a power battery of the hybrid vehicle at each moment according to the equivalent factor sequence. The energy management module 102 is configured to control the hybrid vehicle according to the instantaneous output power of the power battery.

It needs to be stated that for other specific implementations of the energy management apparatus for a hybrid vehicle according to the example of the present disclosure, reference may be made to the energy management method for a hybrid vehicle described above.

The energy management apparatus for a hybrid vehicle according to the example of the present disclosure can achieve the on-line control of the hybrid vehicle by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence, the mileage of each working condition and the target state-of-charge sequence, so that the equivalent factor changes according to the working condition category of the road section and the fuel economy is ensured. Moreover, since the current navigation route is acquired first and the equivalent factor sequence is obtained based on the current navigation route, energy management is achieved on the current navigation route based on the equivalent factor sequence, so that energy management is not affected by the frequency of navigation map data output, the required calculation amount is small, and the fuel economy can be better ensured in a case that the working condition changes.

Based on the energy management method and apparatus for a hybrid vehicle according to the above examples, the present disclosure provides a hybrid vehicle.

FIG. 5 is a structural block diagram of a hybrid vehicle according to an example of the present disclosure.

As shown in FIG. 5, the hybrid vehicle 10 includes the energy management apparatus 100 for a hybrid vehicle described above.

Through the energy management apparatus for a hybrid vehicle described above, the hybrid vehicle according to the example of the present disclosure can achieve the on-line control of the hybrid vehicle by acquiring the road characteristic parameters of the current navigation route of the hybrid vehicle, and obtaining the working condition category sequence of the current navigation route and the mileage of each working condition according to the road characteristic parameters by using the pre-trained neural network model. In addition, after the working condition category sequence and the mileage of each working condition are acquired, it is also required to acquire the target state-of-charge sequence according to the working condition category sequence and the mileage of each working condition, so as to obtain the equivalent factor sequence according to the working condition category sequence, the mileage of each working condition and the target state-of-charge sequence, so that the equivalent factor changes according to the working condition category of the road section and the fuel economy is ensured. Moreover, since the current navigation route is acquired first and the equivalent factor sequence is obtained based on the current navigation route, energy management is achieved on the current navigation route based on the equivalent factor sequence, so that energy management is not affected by the frequency of navigation map data output, the required calculation amount is small, and the fuel economy can be better ensured in a case that the working condition changes.

It should be noted that the logic and/or steps shown in the flowcharts or described in any other manner herein, may be considered as a sequenced list of executable instructions for implementing logical functions, may be specifically implemented in any computer-readable medium to be used by an instruction execution system, apparatus or device (for example, a computer-based system, a system including a processor, or another system that can obtain an instruction from the instruction execution system, apparatus or device and execute the instruction) or to be used by combining such instruction execution systems, apparatuses or devices. In this specification of the present disclosure, the "computer-readable medium" may be any apparatus that may include, store, communicate, propagate, or transmit programs to be used by the instruction execution system, apparatus or device or to be used in combination with the instruction execution system, apparatus or device. More specific examples (a non-exhaustive list) of the computer-readable medium may include: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then the program is stored in a computer memory.

It should be understood that each part of the present disclosure may be implemented by using hardware, software, firmware, or a combination thereof. In the foregoing implementations, multiple steps or methods may be implemented by using software or firmware that are stored in a memory and are executed by a proper instruction execution system. If hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, the description with reference to terms "an embodiment", "some embodiments", "an example", "a specific example", "some examples" and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

In the description of this specification, orientation or position relationships indicated by the terms such as "center", "longitudinal", "transverse", "length", "width", "thickness", "up", "down", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, are not intended to indicate or imply that the mentioned apparatus or component needs to have a particular orientation or needs to be constructed and operated in a particular orientation, and should not be construed as limitations on the present disclosure.

In addition, terms "first" and "second" are used merely for the purpose of description, and should not be construed as indicating or implying relative importance or implying a quantity of indicated technical features. Therefore, a feature defined by "first" or "second" may explicitly indicate or implicitly include at least one of such features. In the descriptions of the present disclosure, unless explicitly specified, "multiple" means at least two, for example, two or three.

In the description of this specification, unless otherwise stated, terms such as "mounting", "connected", "connection" and "fixing" should be understood in a broad sense. For example, it may be fixed connection, detachable connection, or integral connection; or it may be mechanical connection or electrical connection; or it may be direct connection, indirect connection through an intermediary, or internal communication between two components or interaction relationship between two components, unless otherwise explicitly defined. A person of ordinary skill in the art can understand specific meanings of the terms in the present disclosure based on specific situations.

In the present disclosure, unless otherwise explicitly specified or defined, a first feature is located "above" or "below" a second feature may be that the first feature is in a direct contact with the second feature, or the first feature is in an indirect contact with the second feature through an intermediary. In addition, the first feature is "above", "over", or "on" the second feature may be that the first feature is directly above or obliquely above the second feature, or may merely indicate that the horizontal position of the first feature is higher than that of the second feature. The first feature is "below", "under", and "beneath" the second feature may be that the first feature is right below the second feature or at an inclined bottom of the second feature, or may merely indicate that the horizontal position of the first feature is lower than that of the second feature.

Although the examples of the present disclosure have been shown and described above, it can be understood that, the foregoing examples are exemplary and should not be understood as limitation to the present disclosure. A person of ordinary skill in the art can make changes, modifications, replacements, or variations to the foregoing examples within the scope of the present disclosure.

**Claims**

1. An energy management method for a hybrid vehicle, comprising:

   acquiring a working condition category sequence of a current navigation route of the hybrid vehicle and mileage of each working condition of the current navigation route, the working condition category sequence and the mileage of each working condition being obtained according to road characteristic parameters of the current navigation route;

   acquiring a target state-of-charge sequence according to the working condition category sequence and the mileage of each working condition;

   obtaining an equivalent factor sequence according to the working condition category sequence and the target state-of-charge sequence;

   obtaining instantaneous output power of a power battery of the hybrid vehicle at each moment according to the equivalent factor sequence; and

   controlling the hybrid vehicle according to the instantaneous output power of the power battery.

2. The energy management method for a hybrid vehicle according to claim 1, wherein acquiring the target state-of-charge sequence according to the working condition category sequence and the mileage of each working condition comprises:

   acquiring an actual state-of-charge of the power battery at a starting point of the current navigation route;

   determining a state-of-charge change range of the hybrid vehicle at the end of each working condition according to the actual state-of-charge, the working condition category sequence, and the mileage of each working condition; and

   obtaining the target state-of-charge sequence according to the state-of-charge change range at the end of each working condition.

3. The energy management method for a hybrid vehicle according to claim 2, wherein the state-of-charge change range at the end of a first working condition of the current navigation route is obtained according to the actual state-of-charge, road characteristic data of the first working condition, and the mileage of the first working condition; and the state-of-charge change range at the end of a non-first working condition of the current navigation route is obtained according to the state-of-charge change range at the end of a previous working condition of the non-first working condition, road characteristic data of the non-first working condition, and the mileage of the non-first working condition.

4. The energy management method for a hybrid vehicle according to claim 3, wherein the road characteristic data comprises slope data and speed limit data.

5. The energy management method for a hybrid vehicle according to claim 3 or 4, wherein an upper limit of the state-of-charge change range of the working condition is a state-of-charge of the hybrid vehicle at the end of operation of the working condition in a power generation mode, and a lower limit of the state-of-charge change range of the working condition is a state-of-charge of the hybrid vehicle at the end of operation of the working condition in a pure electric mode.

6. The energy management method for a hybrid vehicle according to any one of claims 3 to 5, wherein the target state-of-charge sequence is obtained according to each target state-of-charge selected from the state-of-charge change range corresponding to each working condition.

7. The energy management method for a hybrid vehicle according to any one of claims 1 to 6, wherein the working condition category sequence and the mileage of each working condition are obtained by using a trained neural network model according to the road characteristic parameters of the current navigation route, and a process of training the neural network model comprises:

   acquiring historical driving parameters of the hybrid vehicle on the current navigation route, determining historical road characteristic parameters according to the historical driving parameters, and performing clustering processing on the historical road characteristic parameters to obtain a plurality of working condition categories;
   constructing a training dataset based on the historical road characteristic parameters and the working condition categories; and
   constructing the neural network model and training the neural network model using the training dataset.

8. The energy management method for a hybrid vehicle according to claim 7, wherein the working condition categories comprise: ordinary urban roads, mildly congested urban roads, moderately congested urban roads, severely congested urban roads, expressways, highways, suburban roads, and township roads.

9. The energy management method for a hybrid vehicle according to any one of claims 1 to 8, wherein the road characteristic parameters comprise at least one of: average speed, maximum speed, speed standard deviation, average acceleration, maximum acceleration, minimum acceleration, acceleration standard deviation, acceleration time ratio, deceleration time ratio, uniform speed time ratio, idle time ratio, and cumulative mileage.

10. The energy management method for a hybrid vehicle according to any one of claims 1 to 9, wherein
    for each equivalent factor in the equivalent factor sequence, calculating the instantaneous output power of the battery of the hybrid vehicle under the working condition corresponding to the equivalent factor according to the following formula:

$$arg\, H\left(u, SOC(t), t\right) = arg\dot{m}_{eng}(u, t) + s(t) * \dot{SOC}(t),$$

    wherein H (u, SOC (t), t) is a Hamiltonian function established according to an equivalent consumption minimum strategy, $arg\, H\left(u, SOC(t), t\right)$ is the instantaneous output power of the power battery at moment t, $\dot{m}_{eng}(u, t)$ is the fuel consumption rate of an engine of the hybrid vehicle, $s(t)$ is an equivalent factor at moment t, $SOC(t)$ is the state-of-charge of the power battery at moment t, $\dot{SOC}(t)$ is the state-of-charge change rate, and u is the fuel consumption.

11. The energy management method for a hybrid vehicle according to any one of claims 1 to 10, wherein controlling the hybrid vehicle according to the instantaneous output power of the power battery comprises:

    acquiring instantaneous required power of the hybrid vehicle at moment t;
    subtracting the instantaneous output power of the power battery at the moment t from the instantaneous required power at the moment t to obtain instantaneous required power of an engine of the hybrid vehicle at the moment t; and
    controlling the power battery and the engine according to the instantaneous output power of the power battery at the moment t and instantaneous output power of the engine at the moment t.

12. A computer-readable storage medium, storing a computer program thereon, the computer program, when executed by a processor, implementing the energy management method for a hybrid vehicle according to any one of claims 1 to 11.

13. An electronic device, comprising a memory, a processor, and a computer program stored on the memory and executable on the processor, the computer program, when executed by the processor, implementing the energy management method for a hybrid vehicle according to any one of claims 1 to 11.

14. An energy management apparatus for a hybrid vehicle, comprising:

an acquisition module, configured to acquire a working condition category sequence of a current navigation route of the hybrid vehicle and mileage of each working condition of the current navigation route, the working condition category sequence and the mileage of each working condition being obtained according to road characteristic parameters of the current navigation route; acquire a target state-of-charge sequence according to the working condition category sequence and the mileage of each working condition; obtain an equivalent factor sequence according to the working condition category sequence and the target state-of-charge sequence; and obtain instantaneous output power of a power battery of the hybrid vehicle at each moment according to the equivalent factor sequence; and

an energy management module, configured to control the hybrid vehicle according to the instantaneous output power of the power battery.

15. A hybrid vehicle, comprising the energy management apparatus for a hybrid vehicle according to claim 14.

| Acquire road characteristic parameters of a current navigation route of a hybrid vehicle | S11 |

| Obtain a working condition category sequence of the current navigation route and mileage of each working condition according to the road characteristic parameters by using a pre-trained neural network model | S12 |

| Acquire a target state-of-charge sequence according to the working condition category sequence and the mileage of each working condition, and obtain an equivalent factor sequence according to the working condition category sequence, the mileage of each working condition, and the target state-of-charge sequence by using an equivalent consumption minimum strategy | S13 |

| Obtain instantaneous output power of a power battery of the hybrid vehicle at each moment according to the equivalent factor sequence, and control the hybrid vehicle according to the instantaneous output power of the power battery | S14 |

FIG. 1

FIG. 2

Input layer     Hidden layer     Hidden layer  Output layer

$x_1$

$x_2$

$x_3$

$x_4$

$y$

FIG. 3

Energy management apparatus for hybrid vehicle 100

Acquisition module 101

Energy management module 102

FIG. 4

Hybrid vehicle 10

Energy management apparatus for hybrid vehicle 100

FIG. 5

# INTERNATIONAL SEARCH REPORT

| International application No. |
| --- |
| **PCT/CN2023/108978** |

| A. | CLASSIFICATION OF SUBJECT MATTER |
| --- | --- |

B60W20/11(2016.01)i; B60W10/06(2006.01)i; B60W10/08(2006.01)i

According to International Patent Classification (IPC) or to both national classification and IPC

| B. | FIELDS SEARCHED |
| --- | --- |

Minimum documentation searched (classification system followed by classification symbols)

B60W20/-; B60W10/-

Documentation searched other than minimum documentation to the extent that such documents are included in the fields searched

Electronic data base consulted during the international search (name of data base and, where practicable, search terms used)

CNTXT, ENTXTC, CNKI: 比亚迪, 杨冬生, 朱福堂, 王春生, 沈涛, 武金龙, 混合, 混动, 工况, 路况, 类别, 序列, 顺序, 轨迹, 等效因子, 瞬时, 功率, SOC, 荷电状态, 等效燃油消耗, 自适应, 上限, 下限, 神经网络, 范围, 坡度, 车速, 速度, 限制, 哈密顿; VEN, ENTXT: BYD, road, condition, type, sequence, order, hamilton, equival+, factor, power, SOC, consumption, minimum, adaptive, ECMS, neural, network, slope, speed, limit

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | 黎金科 (LI, Jinke). "插电式混合动力汽车出行工况预测及自适应控制策略研究 (Non-official translation: Research on Travel Condition Prediction and Adaptive Control Strategy of Plug-in Hybrid Electric Vehicles)" <br> 中国优秀硕士学位论文全文数据库工程科技II辑 (Engineering Science and Technology II, China Master's Theses Full-Text Database), No. 8, 15 August 2020 (2020-08-15), pages 33, 63, 66-73, and 77-82 <br> ISSN: 1674-0246, <br> sections 3.3, 4.2, 4.3, 5.1, and 5.2 | 1-15 |
| Y | CN 114179777 A (HENAN UNIVERSITY OF SCIENCE & TECHNOLOGY) 15 March 2022 (2022-03-15) <br> description, paragraphs 36-45, and figures 1-6 | 1-15 |
| A | CN 109895760 A (DALIAN UNIVERSITY OF TECHNOLOGY) 18 June 2019 (2019-06-18) <br> entire document | 1-15 |
| A | CN 110929920 A (CRRC QISHUYAN CO., LTD.) 27 March 2020 (2020-03-27) <br> entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 October 2023** | **31 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/108978** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110936949 A (HUBEI UNIVERSITY OF ARTS AND SCIENCE) 31 March 2020 (2020-03-31)<br>    entire document | 1-15 |
| A | CN 111591279 A (HUNAN UNIVERSITY) 28 August 2020 (2020-08-28)<br>    entire document | 1-15 |
| A | CN 112009455 A (BEIQI FOTON MOTOR CO., LTD.) 01 December 2020 (2020-12-01)<br>    entire document | 1-15 |
| A | CN 113650601 A (SHANGHAI JIAO TONG UNIVERSITY) 16 November 2021 (2021-11-16)<br>    entire document | 1-15 |
| A | US 2019202436 A1 (HYLIION INC.) 04 July 2019 (2019-07-04)<br>    entire document | 1-15 |
| A | WO 2019133957 A1 (HYLIION INC.) 04 July 2019 (2019-07-04)<br>    entire document | 1-15 |

Form PCT/ISA/210 (second sheet) (July 2022)

International application No.

**PCT/CN2023/108978**

| Patent document cited in search report | | | Publication date (day/month/year) | Patent family member(s) | | | Publication date (day/month/year) |
|---|---|---|---|---|---|---|---|
| CN | 114179777 | A | 15 March 2022 | None | | | |
| CN | 109895760 | A | 18 June 2019 | CN | 109895760 | B | 02 June 2020 |
| CN | 110929920 | A | 27 March 2020 | None | | | |
| CN | 110936949 | A | 31 March 2020 | CN | 110936949 | B | 02 March 2021 |
| CN | 111591279 | A | 28 August 2020 | CN | 111591279 | B | 28 May 2021 |
| CN | 112009455 | A | 01 December 2020 | CN | 112009455 | B | 11 March 2022 |
| CN | 113650601 | A | 16 November 2021 | CN | 113650601 | B | 01 March 2022 |
| US | 2019202436 | A1 | 04 July 2019 | US | 10889288 | B2 | 12 January 2021 |
| WO | 2019133957 | A1 | 04 July 2019 | EP | 3732084 | A1 | 04 November 2020 |
| | | | | US | 2019202429 | A1 | 04 July 2019 |
| | | | | US | 11351979 | B2 | 07 June 2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211203935